# EUROPÄISCHE PATENTSCHRIFT

(11) **EP 2 898 514 B1**
(45) Veröffentlichungstag und Bekanntmachung des Hinweises auf die Patenterteilung: **13.02.2019**
(21) Anmeldenummer: 13773191.5
(22) Anmeldetag: 09.09.2013
(51) Int. Cl.: G21C 17/108, F16N 7/30

(54) **VORRICHTUNG ZUR EINBRINGUNG EINES SCHMIERMITTELS IN EINE ROHRLEITUNG**
DEVICE FOR APPLYING A LUBRICANT INSIDE A PIPELINE
DISPOSITIF POUR INTRODUIRE UN LUBRIFIANT DANS UNE TUYAUTERIE

(30) Priorität: 18.09.2012 DE 102012216621
(43) Veröffentlichungstag der Anmeldung: 29.07.2015
(73) Patentinhaber: Framatome GmbH, 91052 Erlangen (DE)
(72) Erfinder: AHA, Simon, 91054 Buckenhof (DE); WISTUBA, Lothar, 91054 Herzogenaurach (DE)
(74) Vertreter: Kugler, Jörg
(86) Internationale Anmeldenummer: PCT/EP2013/068627
(87) Internationale Veröffentlichungsnummer: WO 2014/044568

(56) Entgegenhaltungen:
- DE-A1- 2 010 730
- DE-A1- 2 139 152
- DE-A1- 4 119 609
- DE-B- 1 294 575
- US-A- 3 785 456

## Beschreibung

Die Erfindung betrifft ein Kugelmesssystem und beschreibt in diesem Zusammenhang eine Vorrichtung zur Einbringung eines Schmiermittels in eine Rohrleitung, nämlich in ein sogenanntes Kugelrohr eines Kugelmesssystems als Bestandteil der Instrumentierung eines Kernreaktors, wie es beispielsweise aus den Druckschriften DE 1 953 605 A1 oder EP 2 453 443 A1 bekannt ist. Auch aus DE 21 39 152 A und DE 12 94 575 B ist jeweils ein Kugelmesssystem bekannt.

Eine Vorrichtung zur Einbringung eines Schmiermittels in eine Rohrleitung, die einige Übereinstimmungen mit der hier beschriebenen Vorrichtung aufweist, ist beispielsweise aus DE 41 19 609 A1 bekannt.

Kugelmesssysteme finden in kerntechnischen Anlagen, vorzugweise in Kernkraftwerksanlagen mit einem Druckwasserreaktor, regelmäßigen Einsatz. Hierbei handelt es sich um eine Vorrichtung zum Messen der Leistungsdichteverteilung der Strahlung im Reaktorkern. Bei diesem Vorgang werden Kügelchen aus aktivierbarer Materie, beispielsweise aus Vanadium, durch den Reaktorkern geschleust. Die Kugeln haben einen charakteristischen Durchmesser von weniger als einem Millimeter bis wenigen Millimetern und werden in Röhren parallel zu den Kernbrennstäben geführt. Durch die vorgegebene Positionierung innerhalb der Röhren werden die Kügelchen durch die emittierte Strahlung innerhalb des Reaktors aktiviert und lassen durch ihre bekannte Reihenfolge innerhalb der Röhren Rückschlüsse auf die örtliche Leistungsdichteverteilung innerhalb des Reaktors zu.

Die aktivierten Kugeln liegen nämlich innerhalb der auch als Kugelrohr oder kurz Rohr oder Röhre bezeichneten Rohrleitung nach Art einer Kugelsäule aneinander und werden nach einer gewissen Verweildauer vom Reaktorkern aus auf einen außerhalb des Reaktordruckbehälters angeordneten Messtisch (Detektionsbereich) befördert. Die Beförderung erfolgt gemäß dem Prinzip der Rohrpost durch ein in das Röhrensystem eingeleitetes Antriebs- oder Transportgas, üblicherweise Stickstoff. Aufgrund des auf den Kugeldurchmesser abgestimmten Röhrendurchmessers halten die Kugeln ihre relative Position zueinander und können nach Verlassen des Reaktorkerns exakten Koordinaten innerhalb des Reaktorkerns zugeordnet werden. Die abgegebene Strahlung der Kugeln wird mittels Detektoren auf einem Messtisch abgelesen und liefert so eindeutige Informationen bezüglich der Strahlungsverhältnisse innerhalb des Reaktorkerns.

Ein Nachteil bei dem vorhandenen System ist das komplizierte Verfahren, die Kugeln mit einem Schmiermittel zu versehen, damit sie beim Transport möglichst problemlos durch die Röhren gleiten und nicht steckenbleiben. Bei bestehenden Systemen muss ein Mitarbeiter am Messtisch die Röhren mit dem Strahlung emittierenden Inhalt öffnen und die Kugeln oder die Innenwände der Röhren ausreichend mit Schmiermittel benetzen.

Der Erfindung liegt die Aufgabe zugrunde, dieses Verfahren mittels einer geeigneten Vorrichtung zu automatisieren und so die Schmierung ohne Einsatz eines Mitarbeiters am Messtisch und ohne die Notwendigkeit einer Öffnung der Röhren zu ermöglichen. Die Schmierung sollte insbesondere bedarfsgerecht während des Leistungsbetriebes der Anlage erfolgen und den für eine Kernkraftanlage einschlägigen hohen Sicherheitsstandards genügen.

Diese Aufgabe wird erfindungsgemäß durch ein Kugelmesssystem mit den Merkmalen des Anspruchs 1 gelöst.

Die im erfindungsgemäßen Kugelmesssystem verwendete Vorrichtung zur Einbringung eines Schmiermittels in eine Rohrleitung, kurz Schmiermittelvorrichtung oder Schmiervorrichtung, umfasst demnach
- eine an die Rohrleitung angeschlossene Zufuhrleitung für ein Transportgas, in die ein als T-Stück oder Kreuzstück ausgestaltetes Anschlussstück geschaltet ist,
- eine an das Anschlussstück angeschlossene Querleitung, die einen entlang ihrer Längsrichtung verschiebbaren Schmiermittelstößel umschließt,
- ein an die Querleitung angeschlossenes Schmiermitteldepot,
wobei der Schmiermittelstößel
- an seinem Außenumfang gegenüber der Querleitung abgedichtet ist,
- eine Vertiefung zur Aufnahme einer Portion Schmiermittel aufweist,
- aus einer Aufnahmeposition in eine Abgabeposition (und umgekehrt) verschiebbar ist,
und wobei die Vertiefung
- in der Aufnahmeposition mit dem Schmiermitteldepot kommuniziert, und
- in der Abgabeposition innerhalb des Anschlussstücks angeordnet und von dem zur Rohrleitung strömenden Transportgas überströmbar bzw. anströmbar ist.

Der verschiebbare Schmiermittelstößel bewirkt demnach innerhalb eines geschlossenen und nach außen hin abgedichteten Leitungssystems einen diskontinuierlichen, portionsweisen Transport des Schmiermittels vom Schmiermitteldepot zu der Zufuhrleitung in die mit Schmiermittel zu benetzende Rohrleitung. Der Prozess ist mit Hilfe geeigneter Antriebs- und Steuerungsmittel vollständig automatisierbar. Indem die das Schmiermittel aufnehmende Vertiefung im Schmiermittelstößel in der Abgabeposition vom Transportgas überströmt wird, erfolgt mit der Abgabe zugleich eine Verwirbelung oder Vernebelung und somit eine besonders gute Verteilung des Schmiermittels in den zu schmierenden stromabwärtigen Leitungskomponenten.

In bevorzugter Ausgestaltung sind die Aufnahmeposition und die Abgabeposition jeweils durch einen mechanischen Endanschlag für den Schmiermittelstößel definiert, so dass eine aufwendige Positionsmessung und -regelung für die Einstellung der genannten Positionen entfällt.

Vorteilhafterweise ist die Schmiervorrichtung derart ausgestaltet, dass das in die Zuleitung strömende Transportgas bei Überschreiten eines spezifischen Gasdrucks eine Verschiebung des Schmiermittelstößels von der Aufnahmeposition in die Abgabeposition bewirkt. Mit anderen Worten übernimmt das Transportgas hier eine Doppelfunktion: Es bewegt zum einen nach Art eines pneumatischen Antriebs den als Pneumatikzylinder wirksamen Schmiermittelstößel in der Querleitung von der Aufnahmeposition in die Abgabeposition, und es bläst zum anderen in der Abgabeposition die zuvor dorthin transportierte Schmiermittelportion vom Schmiermittelstößel in die zu schmierende Rohrleitung. Insofern kann man davon sprechen, dass der Schmiermittelstößel eigenmediumgetrieben ist.

Dieses Funktionsprinzip wird in bevorzugter Ausgestaltung dadurch realisiert, dass in Strömungsrichtung des Transportgases gesehen vor dem Anschlussstück eine Zweigleitung von der Zuleitung abzweigt, die am anderen Ende derart in die Querleitung mündet, dass das in die Zweigleitung einströmende Transportgas den Schmiermittelstößel zur Abgabeposition hin drückt. Hierdurch wird automatisch der Transport des Schmiermittelstößels in die Abgabeposition bewirkt, sobald das Transportgas in die Zuleitung und von dort in die Zweigleitung strömt und den Schmiermittelstößel mit genügend hohem Druck beaufschlagt. Insofern ist das System nicht nur eigenmediumgetrieben, sondern auch eigenmediumgesteuert.

Allgemein kann die die Schmiermittelportion tragende Vertiefung endseitig am Schmiermittelstößel angeordnet und das Anschlussstück als T-Stück ausgebildet sein. Es ist aber von Vorteil, wenn das Anschlussstück als Kreuzstück ausgestaltet ist, wobei der Schmiermittelstößel das Kreuzstück für den gesamten Verschiebeweg zwischen Aufnahmeposition und Abgabeposition vollständig durchsetzt, und die Vertiefung dementsprechend eher in einem mittleren Bereich des Schmiermittelstößels angeordnet ist. Hierdurch wird in der Aufnahmeposition und für praktisch den gesamten Verschiebeweg hin zur Abgabeposition sichergestellt, dass der Schmiermittelstößel die zur Rohrleitung führende Zufuhrleitung relativ dicht verschließt oder darin zumindest ein nennenswertes Strömungshindernis darstellt. Dies bewirkt, dass der Schmiermittelstößel über die Zweigleitung mit relativ hohem Druck beaufschlagt und damit zuverlässig in die Abgabeposition bewegt wird.

Die Begriffe T-Stück, Kreuzstück und Querleitung sind hier in einem weiten Sinne zu verstehen und setzen nicht unbedingt eine rechtwinklige Anordnung der Querleitung in Relation zur Zufuhrleitung voraus, sondern beinhalten auch andere Winkelrelationen. Bei einem starren Schmiermittelstößel muss die Querleitung innerhalb des Verschiebereiches geradlinig sein. Für die Zufuhrleitung ist eine Geradlinigkeit nicht zwingend erforderlich.

Generell könnte der Rücktransport des Schmiermittelstößels aus der Abgabeposition in die Aufnahmeposition nach erfolgter Schmiermittelabgabe ebenfalls durch das Transportgas bewirkt werden. Es hat sich jedoch als vorteilhaft herausgestellt, wenn eine Rückstellfeder vorhanden ist, die den Schmiermittelstößel bei Unterschreiten des spezifischen Gasdrucks in die Aufnahmeposition zurück befördert. Der gesamte Bewegungsablauf wird damit in denkbar einfacher Weise durch das Transportgas selber gesteuert: Bei genügend hohem Druck setzt das Transportgas den Schmiermittelstößel in Richtung Abgabeposition in Bewegung; bei Unterschreiten des kritischen Druckwertes wird er von der Rückstellfeder in die Ausgangstellung, also in die Aufnahmeposition zurück gezogen, so dass die Vertiefung erneut mit einer Portion Schmiermittel befüllt wird.

Das Schmiermitteldepot befindet sich bevorzugt geodätisch etwas höher als der Schmiermittelstößel, so dass das Schmiermittel einfach durch ein kurzes Verbindungsstück oder eine Verbindungsleitung unter Wirkung der Schwerkraft nach unten in die ihn aufnehmende Vertiefung des Schmiermittelstößels übertreten (je nach Konsistenz strömen, rieseln, kriechen etc.) kann, wenn dieser sich in der Aufnahmeposition befindet.

In einer einfach realisierbaren und zweckmäßigen Ausgestaltung besitzt der Schmiermittelstößel einen zylindrischen Grundkörper, in dem die Vertiefung als umlaufende Ringnut ausgebildet ist. Durch eine passgenaue Abstimmung der Durchmesser des Schmiermittelstößels und der ihn aufnehmenden Querleitung und/oder durch geeignete Dichtungselemente (am Umfang des Schmiermittelstößels angebrachte Dichtringe etc.) seitlich zur Vertiefung wird gewährleistet, dass kein Schmiermittel in die Querleitung eindringen kann, wenn sich der Schmiermittelstößel außerhalb der Aufnahmeposition befindet.

In enger Abstimmung mit dem erfindungsgemäßen Einsatzzweck der Schmiervorrichtung für die Schmierung der Kugelrohre eines Kugelmesssystems handelt es sich bei dem Schmiermittel etwa um ein pulverisiertes Trockenschmiermittel, das vorzugsweise Molybdändisulfid als Hauptbestandteil enthält. Derartige Schmiermittel sind im Handel beispielsweise unter dem Markennamen "Molykote" von der Dow Corning Corporation erhältlich. Als Antriebs- oder Transportgas wird beispielsweise inertisierend wirkender Stickstoff verwendet. Für andere Einsatzzwecke könnte auch Luft (Druckluft) verwendet werden.

Wie bereits erwähnt, dient die Schmiervorrichtung zur Einbringung eines Schmiermittels in die auch als Kugelrohre bezeichneten, eine Anzahl von radioaktiv aktivierbaren Kugeln enthaltenden Rohrleitungen eines Kugelmesssystems als Bestanteil der Kerninstrumentierung eines Kernreaktors.

Die Schmierung der Kugelsäulen kann teilsystembezogen oder kugelrohrbezogen durch eine entsprechende Anzahl von Ventilen erfolgen, die beispielsweise in einer Ventilbatterie montiert und eingangsseitig mit einer externen Druckgasquelle verbunden sind.

Dabei ist vorteilhafterweise eben jenes Antriebs- oder Transportgas, welches zum Antrieb und zur Steuerung des Schmiermittelstößels und zur Verwirbelung der abgegebenen Schmiermittelportion verwendet wird, auch zum Transport der Kugeln in der jeweiligen Rohrleitung (Kugelrohr) vorgesehen. Es kann allerdings nicht gleichzeitig mit dem Transport der Kugeln eine Schmierung vorgenommen werden, da sich in diesem Fall zwischen Kugelrohr und Zuleitung der Schmiervorrichtung keine Druckdifferenz einstellt. Vielmehr kann immer dann, wenn sich die Kugeln in ihrer vorgesehenen Warteposition befinden, nach Bedarf in die entsprechende Rohrleitung durch in die Zuleitung einströmendes Antriebsgas automatisch eine Portion Schmiermittel eingebracht und darin verteilt werden. Nach dem Abstellen der Gaszufuhr kehrt die Schmiervorrichtung selbsttätig in die Ausgangslage zurück und wird automatisch durch Auffüllung der Schmiermittelportion in der Vertiefung des Schmiermittelstößels für den nächsten Einsatzzyklus bereit gemacht.

Alle diese Vorgänge laufen automatisch durch einfache mechanische / pneumatische Wechselwirkungen ab und bedürfen keiner elektronischen Regelung oder dergleichen und benötigen außer der Zufuhr von unter Druck stehendem Gas oder Dampf keine sonstige Energiezufuhr. Die Steuerung des Schmiermittelstößels durch An- und Abschalten der Druckbeaufschlagung kann während des Leistungsbetriebes von außerhalb des Messtischraumes geschehen, so dass kein Personenzugang zum Messtischraum mehr erforderlich ist und die Personendosis entscheidend verringert werden kann.
Auch wenn die Schmiervorrichtung hier vor allem mit Blick auf die erfindungsgemäße Anwendung in einem nuklearen Kugelmesssystem beschrieben wurde, so ist sie doch allgemein überall dort verwendbar, wo ein Schmiermittel oder ein sonstiger portionierbarer - flüssiger, geleeartiger oder fester, insbesondere pulvriger oder rieselfähiger fester oder aus separaten oder trennbaren festen Einheiten bestehender - Stoff unter den beschriebenen Randbedingungen mit Hilfe eines strömenden Transportfluides (Gas, Flüssigkeit, Dampf oder ein Gemisch daraus) in eine Rohrleitung oder in ein sonstiges Zielvolumen, insbesondere in ein gegenüber der Umgebung abgeschlossenes Volumen eingebracht werden soll. Anstelle von einem Schmiermitteldepot und einem Schmiermittelstößel würde man dann allgemeiner von einem Stoffdepot und einem Transportstößel sprechen usw.

2. Die Erfindung wird in Anspruch 1 definiert. Weitere Merkmale und verbessernde Maßnahmen werden nachstehend gemeinsam mit der Beschreibung eines Ausführungsbeispiels der Erfindung anhand der schematischen Figuren näher dargestellt. Dabei zeigen:
- FIG. 1: einen Ausschnitt aus einem Druckwasserreaktor mit einem Kugelmesssystem und mit einer zugehörigen Schmiermittelvorrichtung,
- FIG. 2: den strukturellen Aufbau der Schmiermittelvorrichtung im Detail, hier in einem ersten Betriebszustand, und
- FIG. 3: die Schmiermittelvorrichtung in einem zweiten Betriebszustand.

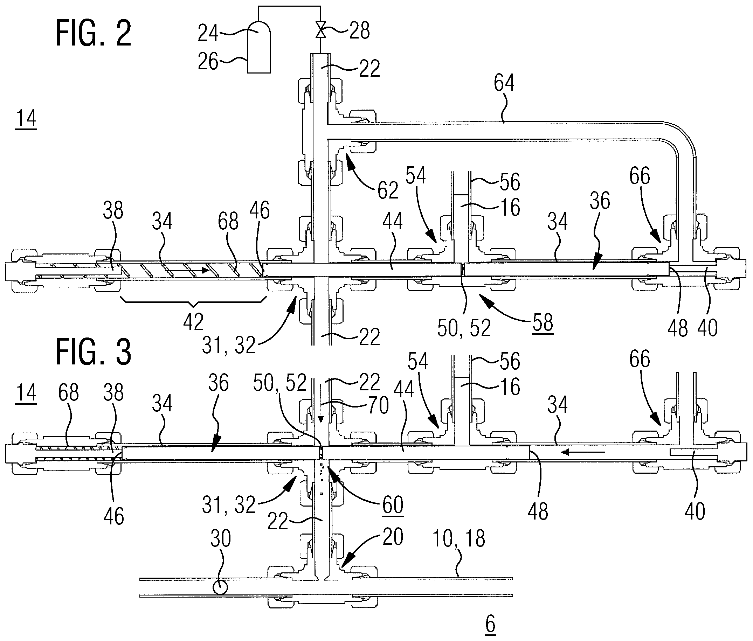

Dabei ist in FIG. 2 der untere Teil der Schmiermittelvorrichtung wegelassen, der in FIG. 3 zu sehen ist, und in FIG. 3 ist der obere Teil der Schmiermittelvorrichtung wegelassen, der in FIG. 2 zu sehen ist

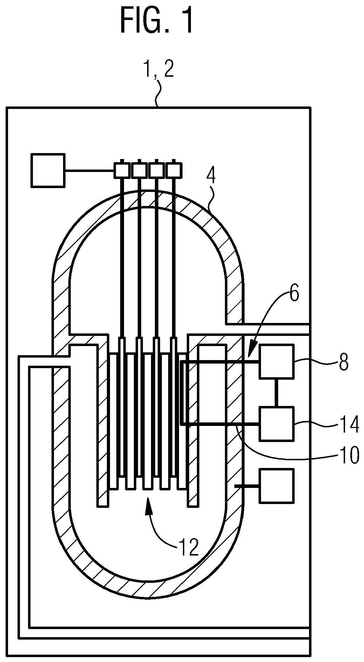

In FIG. 1 ist ausschnittsweise ein Kernreaktor 1, hier ein Druckwasserreaktor 2, mit einem Reaktordruckbehälter 4 dargestellt, dem ein Kugelmesssystem 6 mit einer Detektoranordnung 8 zugeordnet ist. Das lediglich schematisch dargestellte Kugelmesssystem 6 weist ein System von geschlossenen Rohrleitungen auf, die auch als Kugelrohre 10 bezeichnet werden, und die durch die Wand des Reaktordruckbehälters 4 in diesen hinein und an den Brennstäben des Reaktorkerns 12 vorbei geführt sind. Die Kugelrohre 10 enthalten Säulen von aktivierbaren Kugeln, beispielsweise aus Vanadium. Die eigentliche Messeinheit mit der Detektoranordnung 8 befindet sich außerhalb des Reaktordruckbehälters 4.

Die mit einem Schmiermittel benetzten Kugeln werden durch ein unter Druck stehendes Transportgas nach dem Prinzip der Rohrpost durch die Kugelrohre 10 in den Reaktordruckbehälter 4 und wieder zurück in die Detektoranordnung 8 befördert. Nachdem die Kugeln diesen Kreislauf einmal durchlaufen haben, können durch die Messung an der Detektoranordnung 8 valide Aussagen über die Leistungsdichteverteilung innerhalb des Reaktorkerns 12 getroffen werden.

Zur Einbringung des Schmiermittels in die Kugelrohre 10 ist eine in FIG. 1 nur schematisch dargestellte Schmiermittelvorrichtung 14 vorgesehen, die außerhalb des Reaktordruckbehälters 4 an das Rohrleitungssystem angekoppelt ist.

Die Schmiermittelvorrichtung 14 ist in FIG. 2 und FIG. 3 im Detail dargestellt, und zwar in zwei unterschiedlichen Betriebszuständen, die weiter unten eingehend beschrieben werden.

Der strukturelle Aufbau der Schmiermittelvorrichtung 14 ist wie folgt:
An die mit Schmiermittel 16 zu beaufschlagende Rohrleitung 18 des Kugelmesssystems 6 ist mittels eines T-Stücks 20 eine Zufuhrleitung 22 oder kurz Zuleitung für ein unter Druck stehendes Transportgas 24 angeschlossen. Als Transportgas 24 wird hier Stickstoff verwendet, der von außen durch eine hier nur schematisch dargestellte Gasflasche 26 und/oder einen Kompressor zugeführt wird. Zur Steuerung der Gaszufuhr ist ein Absperrventil 28 in der Zufuhrleitung 22 angeordnet. Der Durchmesser der Anschlussbohrung im T-Stück 20 ist so klein gehalten, dass die in der Rohrleitung 18 befindlichen Kugeln 30 nicht hindurch passen und somit nicht seitlich in die Zufuhrleitung 22 übertreten können.

In die Zufuhrleitung 22 ist ein Anschlussstück 31 in Gestalt eines Kreuzstücks 32 geschaltet, an das ferner eine Querleitung 34 angeschlossen ist. In der Querleitung 34 ist ein Schmiermittelstößel 36 längsverschiebbar angeordnet, wobei die beiden Endanschläge 38, 40 den maximalen Verschiebeweg 42 des Schmiermittelstößels 36 festlegen. Die Endanschläge 38, 40 sind derart positioniert, dass der Schmiermittelstößel 36 für den gesamten Verschiebeweg 42 das Kreuzstück 32 vollständig durchsetzt. Der Schmiermittelstößel 36 weist einen zylindrischen Grundkörper 44 auf, dessen Durchmesser passgenau auf den Durchmesser der Querleitung 34 abgestimmt ist, so dass einerseits die gewünschte Längsverschiebbarkeit gegeben ist, und das andererseits eine Abdichtung der Querleitung 34 erzielt wird. Zur Verstärkung der Dichtwirkung können am Außenumfang des Schmiermittelstößels 36 in den Figuren nicht näher dargestellte Dichtringe vorhanden sein. Die beiden Stirnflächen 46, 48 des Schmiermittelstößels 36 sind jeweils in der Endstellung zur Anlage an den zugeordneten Endanschlägen 38, 40 vorgesehen.

Der Schmiermittelstößel 36 weist ferner in seinem mittleren Bereich eine Vertiefung 50 in Gestalt einer umlaufenden Ringnut 52 auf, die in der rechten Endlage des Schmiermittelstößels 36, wie in FIG. 2 dargestellt, mit einem mittels eines T-Stücks 54 an die Querleitung 34 angeschlossenen Schmiermitteldepot 56 kommuniziert. Das im Schmiermitteldepot 56 bevorratete Schmiermittel 16 ist ein pulvriges Trockenschmiermittel und basiert vorteilhafterweise auf Molybdändisulfid. Der Vorratsbehälter des Schmiermitteldepots 56 befindet sich direkt oberhalb des Anschlusses an die Querleitung 34, so dass in der durch die rechte Endlage des Schmiermittelstößels realisierten Aufnahmeposition 58 eine automatische Auffüllung der Ringnut 52 mit einer entsprechenden Portion Schmiermittel 16 erfolgt, die von oben herunterrieselt.

In der linksseitigen Endlage befindet sich die Ringnut 52 des Schmiermittelstößels 36 im Kreuzungsbereich von Zufuhrleitung 22 und Querleitung 34 innerhalb des Kreuzstücks 32 und ist dabei von dem in der Zufuhrleitung 22 zur Rohrleitung 18 hin strömenden Transportgas 24 überströmbar, wenn das Absperrventil 28 geöffnet ist. Dabei wird das zuvor in der Ringnut 52 transportierte Schmiermittel 16 in die Rohrleitung 18 geblasen und verwirbelt (Abgabeposition 60).

Stromaufwärts des Kreuzstücks 32 und stromabwärts des Absperrventils 28 zweigt in einem T-Stück 62 eine Zweigleitung 64 von der Zufuhrleitung 22 ab, die am anderen Ende in einem T-Stück 66 in die ansonsten verschlossene Querleitung 34 mündet. Der Anschluss befindet sich rechts von der rechten Stirnfläche 48 des Schmiermittelstößels 36, auch dann, wenn dieser sich in der rechten Endlage, sprich in der Aufnahmeposition 58, befindet. Dadurch wird die rechte Stirnfläche 48 des Schmiermittelstößels 36 mit Druck beaufschlagt, wenn bei geöffnetem Absperrventil 28 Transportgas 24 in die Zufuhrleitung 22 strömt.

Weiterhin ist am linken Ende der Querleitung 34 eine als Druckfeder ausgebildete Rückstellfeder 68 angeordnet, die auf die linke Stirnfläche 46 des Schmiermittelstößels 36 einwirkt, sobald er aus der Aufnahmeposition 58 zur Abgabeposition 60 hin ausgelenkt ist.

Die Federkraft ist derart dimensioniert, dass bei Überschreiten eines systemimmanenten, spezifischen Gasdrucks in der Zweigleitung 64 das Transportgas 24 den Schmiermittelstößel 36 aus der Aufnahmeposition 58 in die Abgabeposition 60 drückt, während bei Unterschreiten des spezifischen Gasdrucks in der Zweigleitung 64 die durch die Rückstellfeder 68 aufgebrachte, rechtsgerichtete Rückstellekraft überwiegt und den Schmiermittelstößel 36 zurück in die Aufnahmeposition 58 drückt und ihn dort hält.

Dabei ist zum einen zu beachten, dass infolge der Abdichtung des Schmiermittelstößels 36 gegenüber der Querleitung 34 das Transportgas 24 keinen Druck auf die linke Stirnfläche 46 des Schmiermittelstößels 46 ausüben kann, und dass zum anderen der das Kreuzstück 32 durchsetzende Schmiermittelstößel 36 die Zufuhrleitung 22 an dieser Stelle zwar nicht vollständig, aber doch relativ dicht verschließt, selbst wenn durch die im Kreuzstück 32 befindliche Ringnut 52 ein etwas größerer Überströmquerschnitt bereitgestellt ist.

Die Bewegungsabläufe beim Betrieb der Schmiermittelvorrichtung 14 sind nun insgesamt wie folgt:
Die Rückstellfeder 68 fixiert zunächst bei geschlossenem Absperrventil 28 den Schmiermittelstößel 36 in der Aufnahmeposition 58, wodurch die Ringnut 52 mit einer Portion Schmiermittel 16 aus dem Schmiermitteldepot 56 befüllt wird (FIG. 2).

Anschließend wird durch Öffnen des Absperrventils 28 ein spezifischer Gasdruck erzeugt, der eine nach links gerichtete resultierende Kraft auf den Schmiermittelstößel 36 bewirkt, die diesen in die Abgabeposition 60 drückt. Die Rückstellfeder 68 wird entsprechend gestaucht. Durch die vorherrschende Druckdifferenz kann das Transportgas 24 durch die Ringnut 52 hindurch bzw. vorbei strömen und befördert so die dort aufgenommene Schmiermittelportion in die stromabwärts angeschlossene Rohrleitung 18. Das Schmiermittel 16 wird so in das Kugelmesssystem 6 zur Schmierung der Kugelsäulen injiziert (FIG. 3).

Sobald die Druckbeaufschlagung durch Schließen des Absperrventils 28 abgestellt wird, bewegt die Rückstellfeder 68 den Schmiermittelstößel 36 wieder zurück in die Aufnahmeposition 58 und die Vorgänge beginnen von neuem.

### Bezugszeichenliste

| | | | |
|---|---|---|---|
| 1 | Kernreaktor | 60 | Abgabeposition |
| 2 | Druckwasserreaktor | 62 | T-Stück |
| 4 | Reaktordruckbehälter | 64 | Zweigleitung |
| 6 | Kugelmesssystem | 66 | T-Stück |
| 8 | Detektoranordnung | 68 | Rückstellfeder |
| 10 | Kugelrohr | 70 | Strömungsrichtung |
| 12 | Reaktorkern | | |
| 14 | Sch m ierm ittelvorrichtu ng | | |
| 16 | Schmiermittel | | |
| 18 | Rohrleitung | | |
| 20 | T-Stück | | |
| 22 | Zufuhrleitung | | |
| 24 | Transportgas | | |
| 26 | Gasflasche | | |
| 28 | Absperrventil | | |
| 30 | Kugel | | |
| 31 | Anschlussstück | | |
| 32 | Kreuzstück | | |
| 34 | Querleitung | | |
| 36 | Schmiermittelstößel | | |
| 38 | linker Endanschlag | | |
| 40 | rechter Endanschlag | | |
| 42 | Verschiebeweg | | |
| 44 | Grundkörper | | |
| 46 | linke Stirnfläche | | |
| 48 | rechte Stirnfläche | | |
| 50 | Vertiefung | | |
| 52 | Ringnut | | |
| 54 | T-Stück | | |
| 56 | Schmiermitteldepot | | |
| 58 | Aufnahmeposition | | |

## Patentansprüche

1. Kugelmesssystem (6) als Bestanteil der Kerninstrumentierung eines Kernreaktors (1) mit mindestens einer eine Anzahl von Kugeln (30) enthaltenden Rohrleitung (10, 18),
**gekennzeichnet durch** eine Vorrichtung (14) zur Einbringung eines Schmiermittels (16) in die Rohrleitung (18) mit
• einer an die Rohrleitung (18) angeschlossenen Zufuhrleitung (22) für ein Transportgas (24), in die ein als T-Stück oder Kreuzstück (32) ausgestaltetes Anschlussstück (31) geschaltet ist,
• einer an das Anschlussstück (31) angeschlossenen Querleitung (34), die einen entlang ihrer Längsrichtung verschiebbaren Schmiermittelstößel (36) umschließt,
• einem an die Querleitung (34) angeschlossenen Schmiermitteldepot (56),
wobei der Schmiermittelstößel (36)
• an seinem Außenumfang gegenüber der Querleitung (34) abgedichtet ist,
• eine Vertiefung (50) zur Aufnahme einer Portion Schmiermittel (16) aufweist,
• aus einer Aufnahmeposition (58) in eine Abgabeposition (60) verschiebbar ist,
und wobei die Vertiefung (50)
• in der Aufnahmeposition (58) mit dem Schmiermitteldepot (56) kommuniziert, und
• in der Abgabeposition (60) innerhalb des Anschlussstücks (31) angeordnet und von dem zur Rohrleitung (18) strömenden Transportgas (24) überströmbar ist,
und wobei das Transportgas (24) den Transport der Kugeln (30) in der Rohrleitung (18) bewirkt.

2. Kugelmesssystem (6) nach Anspruch 1, wobei die Aufnahmeposition (58) und die Abgabeposition (60) jeweils durch einen Endanschlag (38, 40) für den Schmiermittelstößel (36) definiert sind.

3. Kugelmesssystem (6) nach Anspruch 1 oder 2, welches derart ausgestaltet ist, dass das in die Zuleitung (22) strömende Transportgas (24) bei Überschreiten eines spezifischen Gasdrucks eine Verschiebung des Schmiermittelstößels (36) von der Aufnahmeposition (58) in die Abgabeposition (60) bewirkt.

4. Kugelmesssystem (6) nach Anspruch 3, wobei in Strömungsrichtung (70) des Transportgases (24) gesehen vordem Anschlussstück (31) eine Zweigleitung (64) von der Zuleitung (22) abzweigt, die am anderen Ende derart in die Querleitung (34) mündet, dass das in die Zweigleitung (64) einströmende Transportgas (24) den Schmiermittelstößel (36) zur Abgabeposition (60) hin drückt.

5. Kugelmesssystem (6) nach Anspruch 4, wobei das Anschlussstück (31) als Kreuzstück (32) ausgestaltet ist, und wobei der Schmiermittelstößel (36) das Kreuzstück (32) für den gesamten Verschiebeweg (42) zwischen Aufnahmeposition (58) und Abgabeposition (60) vollständig durchsetzt.

6. Kugelmesssystem (6) nach einem der Ansprüche 3 bis 5, wobei eine Rückstellfeder (68) vorhanden ist, die den Schmiermittelstößel (36) bei Unterschreiten des spezifischen Gasdrucks in die Aufnahmeposition (58) zurück befördert.

7. Kugelmesssystem (6) nach einem der Ansprüche 1 bis 6, wobei der Schmiermittelstößel (36) einen zylindrischen Grundkörper (44) besitzt, in dem die Vertiefung (50) als umlaufende Ringnut (52) ausgebildet ist.

8. Kugelmesssystem (6) nach einem der Ansprüche 1 bis 7, wobei das Schmiermittel (16) ein pulverisiertes Trockenschmiermittel ist und vorzugsweise Molybdändisulfid als Hauptbestandteil enthält.

9. Kugelmesssystem (6) nach einem der Ansprüche 1 bis 8, wobei das Transportgas (24) Stickstoff ist oder als Hauptbestandteil enthält.

## Claims

1. A ball measurement system (6) as part of the nuclear instrumentation of a nuclear reactor (1) with at least one pipeline (10, 18) containing a number of balls (30),
**characterized by** a device (14) for applying a lubricant (16) inside the pipeline (18), with
• a feed line (22) for a transport gas (24), connected to the pipeline (18), to which is switched a connection piece (31) configured as a T-junction or cross piece (32),
• a transverse line (34) connected to the connection piece (31), enclosing a lubricant piston (36) able to move along the line in longitudinal direction,
• a lubricant reservoir (56) connected to the transverse line (34),
wherein the lubricant piston (36)
• is sealed off against the transverse line (34) at its outer circumference,
• has a recess (50) to receive a portion of lubricant (16),
• can be moved from a receiving position (58) to a dispensing position (60),
and wherein the recess (50)
• communicates with the lubricant reservoir (56) in the receiving position (58), and
• is arranged inside the connection piece (31) in the dispensing position (60) and the transport gas (24) flowing to the pipeline (18) can flow over it,
and wherein the transport gas (24) accomplishes the transport of the balls (30) in the pipeline (18).

2. The ball measurement system (6) of claim 1, wherein the receiving position (58) and the dispensing position (60) are each defined by an end stop (38, 40) for the lubricant piston (36).

3. The ball measurement system (6) of claim 1 or 2, which is configured such that the transport gas (24) flowing into the feed line (22), upon exceeding a specific gas pressure, brings about a displacement of the lubricant piston (36) from the receiving position (58) to the dispensing position (60).

4. The ball measurement system (6) of claim 3, wherein a branch line (64) branches off from the feed line (22) upstream of the connection piece (31), viewed in the flow direction (70) of the transport gas (24), the other end of which emerges into the transverse line (34) in such a manner that the transport gas (24) flowing into the branch line (64) forces the lubricant piston (36) into the dispensing position (60).

5. The ball measurement system (6) of claim 4, wherein the connection piece (31) is configured as a cross piece (32), and wherein the lubricant piston (36) passes entirely through the cross piece (32) for the total displacement path (42) between the receiving position (58) and the dispensing position (60).

6. The ball measurement system (6) of any of claims 3 to 5, wherein a return spring (68) is present, which returns the lubricant piston (36) to the receiving position (58) upon falling below the specific gas pressure.

7. The ball measurement system (6) of any of claims 1 to 6, wherein the lubricant piston (36) has a cylindrical base body (44), in which the recess (50) is formed as a circumferential annular groove (52).

8. The ball measurement system (6) of any of claims 1 to 7, wherein the lubricant (16) is a pulverized dry lubricant and preferably contains molybdenum disulfide as its principal component.

9. The ball measurement system (6) of any of claims 1 to 8, wherein the transport gas (24) is nitrogen or contains nitrogen as its principal component.

## Revendications

1. Système de mesure à billes (6) formant partie de l'équipement d'instruments nucléaire d'un réacteur nucléaire (1) avec au moins une tuyauterie (10, 18) contenant un nombre de billes (30),
**caractérisé par** un dispositif (14) pour introduire un lubrifiant (16) dans la tuyauterie (18), avec
• une ligne d'alimentation (22) pour un gaz de transport (24), reliée à la tuyauterie (18), dans laquelle est montée une pièce de connexion (31) configurée comme une pièce en T ou une pièce en croix (32),
• une ligne transversale (34) reliée à la pièce de connexion (31), entourant un piston de lubrifiant (36) qui peut se mouvoir le long de la ligne en direction longitudinale,
• un réservoir de lubrifiant (56) relié à la ligne transversale (34),
dans lequel le piston de lubrifiant (36)
• est étanché contre la ligne transversale (34) sur sa circonférence extérieure,
• a un creux (50) pour recevoir une portion de lubrifiant (16),
• peut être mû d'une position de réception (58) à une position de livraison (60),
et dans lequel le creux (50)
• communique avec le réservoir de lubrifiant (56) dans la position de réception (58), et
• est disposé au-dedans de la pièce de connexion (31) dans la position de livraison (60) et le gaz de transport (24) coulant vers la tuyauterie (18) peut couler par-dessus de lui,
et dans lequel le gaz de transport (24) effectue le transport des billes (30) dans la tuyauterie (18).

2. Système de mesure à billes (6) selon la revendication 1, dans lequel la position de réception (58) et la position de livraison (60) sont chacune définies par une butée de fin de course (38, 40) pour le piston de lubrifiant (36).

3. Système de mesure à billes (6) selon la revendication 1 ou 2, qui est configuré de manière que le gaz de transport (24) coulant dans la ligne d'alimentation (22), lorsqu'une pression spécifique du gaz est excédée, cause un déplacement du piston de lubrifiant (36) de la position de réception (58) vers la position de livraison (60).

4. Système de mesure à billes (6) selon la revendication 3, dans lequel une ligne de branchement (64) branche de la ligne d'alimentation (22) en amont de la pièce de connexion (31), vu dans le sens du courant (70) du gaz de transport (24), l'autre bout d'elle débouche dans la ligne transversale (34) de façon que le gaz de transport (24) coulant dans la ligne de branchement (64) pousse le piston de lubrifiant (36) dans la position de livraison (60).

5. Système de mesure à billes (6) selon la revendication 4, dans lequel la pièce de connexion (31) est configuré comme une pièce en croix (32) et dans lequel le piston de lubrifiant (36) passe entièrement au travers de la pièce en croix (32) pour le chemin de déplacement (42) total entre la position de réception (58) et la position de livraison (60).

6. Système de mesure à billes (6) selon l'une quelconque des revendications 3 à 5, dans lequel un ressort de rappel (68) est présent, qui rappelle le piston de lubrifiant (36) à la position de réception (58) lorsque la pression spécifique du gaz est sous-dépassée.

7. Système de mesure à billes (6) selon l'une quelconque des revendications 1 à 6, dans lequel le piston de lubrifiant (36) a un corps de base (44) cylindrique dans lequel le creux (50) est formé comme une rainure annulaire circonférentielle (52).

8. Système de mesure à billes (6) selon l'une quelconque des revendications 1 à 7, dans lequel le lubrifiant (16) est un lubrifiant sec pulvérisé et contient de préférence du bisulfure de molybdène comme composant principal.

9. Système de mesure à billes (6) selon l'une quelconque des revendications 1 à 8, dans lequel le gaz de transport (24) est azote or contient de l'azote comme composant principal.
